# EUROPEAN PATENT APPLICATION

(11) **EP 3 575 841 A1**
(43) Date of publication of application: **04.12.2019**
(21) Application number: 18175112.4
(22) Date of filing: 30.05.2018
(51) Int. Cl.: G02B 6/44

(54) **FIBRE CABLE GUIDE**

(71) Applicant: Corning Research & Development Corporation, Corning, New York 14831 (US)
(72) Inventor: Lutterkordt, Ulrich, 42111 Wuppertal (DE)
(74) Representative: Epping - Hermann - Fischer

(57) **Abstract**

A fibre guide (1) for guiding an optical fibre cable (10) in a fibre management device, comprising
a) a plurality of guide elements (41, 42, 43, 44) providing first, second and third contact points (51, 52, 53) for contacting and guiding the fibre cable, and
b) a hinge (60), defining a pivot axis (70) and pivotably attaching a first guide element (42) of the plurality of guide elements to a second guide element (43) of the plurality of guide elements.

The second guide element (43) can be pivoted, relative to the first guide element (42), about the pivot axis (70) between a first pivot position, in which the first, second and third contact points are arranged on a first circle (80) having a first radius (R1), and a second pivot position, in which the first, second and third contact points are arranged on a second circle having a second radius, the second radius being different from the first radius.

## Description

This disclosure relates to guiding structures for optical fibres or optical fibre cables in fibre management devices of fibre-optic communication networks, as well as to processes for adapting the bending radius of such guiding structures.

Bending an optical fibre to a radius below its minimum bending radius for longer times can cause loss of light intensity and/or damage to the fibre. Different types of optical fibres have specific long-term minimum bending radii. In fibre management devices, optical fibres and optical fibre cables are routed between locations. Guiding structures (also referred to as "fibre guides" herein) ensure that fibres are not bent below their minimum bending radius as the fibres are routed. Long-term minimum bend radii for different types of optical fibres are typically between 2 centimetres (cm) and 30 cm.

An example of such a guiding structure in a fibre management tray is shown, for example, in the International Patent Application WO 2015/065908 A1.

In a fibre management device, fibres of a first type, having a certain minimum bending radius, may be replaced by new fibres of a second type, having a different minimum bending radius. In that case, the existing fibre guides adapted for the first minimum bending radius may have to be replaced, because these existing fibre guides either provide a too-large radius for the new fibres and thereby waste space in the fibre management device, or because the existing fibre guides provide a too-small radius for the new fibres and increase the risk of light losses and fibre damage. Replacing the fibre guides, however, creates cost for hardware and labour.

The present disclosure, attempting to address such problems, provides a fibre guide for guiding an optical fibre cable in a fibre management device, the fibre guide comprising
a) a plurality of guide elements providing a first contact point, a second contact point and a third contact point for contacting and guiding the fibre cable, characterized in that the fibre guide further comprises
b) a hinge, defining a pivot axis and pivotably attaching a first guide element of the plurality of guide elements to a second guide element of the plurality of guide elements,
wherein the second guide element can be pivoted, relative to the first guide element, about the pivot axis between a first pivot position, in which the first, second and third contact points are arranged on a first circle having a first radius, and a second pivot position, in which the first, second and third contact points are arranged on a second circle having a second radius, the second radius being different from the first radius.

The contact points lie on a circle having a guiding radius defined by the position of the guide elements. The hinge facilitates adjustment of the guiding radius defined by the guide elements by pivoting the second guide element, so that the guide elements can be adjusted to guide fibre cables of different minimum bend radii. This can make replacement of guiding structures obsolete and make such fibre management devices more versatile.

An optical fibre cable may be, for example, a single optical fibre, a single-fibre cable or a multi-fibre cable. An optical fibre cable may comprise a cable sheath enveloping one optical fibre or a plurality of optical fibres. The enveloped fibre(s) enveloped by the cable sheath may be enveloped individually by individual fibre sheaths or may not be individually enveloped.

A fibre management device is a device for routing fibres or fibre cables along certain advantageous paths, e.g. from a splitter towards a connector location. A fibre management device may be, for example, a fibre organizer, a splice tray, an overlength storage, an optical fibre closure, an optical distribution frame, an optical fibre distribution box, a splitter module, or the like.

A fibre management device may be a device of its own, or it may be comprised in a larger device. Hence a fibre management device may be, for example, a splice tray, such as a splice tray arranged in an optical fibre closure, or a fibre management tray arranged in an optical distribution closure.

Fibre guides are structural elements of fibre management devices which define directions and paths of fibre cables routed in the fibre management devices. Fibre guides have guiding surfaces by which fibre cables are guided. The guiding of fibre cables is done by the fibre cable contacting a guiding surface, and the guiding surface providing resistance to the fibre cable when the fibre cable is moved, e.g. by tension or vibration or gravity, towards the guiding surface. Where a fibre management device comprises a flat base supporting the fibre cables, fibre guides may be walls or pins or spools, or portions of walls or spools protruding orthogonally from the flat base.

Generally, a fibre guide according to the present disclosure may comprise a guiding surface providing contact points for contacting the fibre cable and guiding the fibre cable. A fibre guide may be shaped such as to provide an extended contact surface for contacting the fibre cable and guiding the fibre cable. In that case, the contact surface may be considered to comprise a plurality of contact points for contacting and guiding the fibre cable.

Alternatively, a fibre guide may be shaped such as to provide three or more isolated contact locations, possibly having small areas, for contacting the fibre cable and guiding the fibre cable. In that case the first, second and third contact points for contacting and guiding the fibre cable may be comprised in the isolated contact locations. A triangular portion of a fibre guide, for example, provides an isolated contact location at a corner of the triangle.

A fibre guide may comprise, e.g. be formed by, a plurality of guide elements. A guide element, as used in this disclosure, is a component of a fibre guide. A guide element provides a contact point or a plurality of contact points for contacting and guiding a fibre cable. A fibre guide may comprise other components, other than guide elements, which may or may not provide a contact point or a plurality of contact points for contacting and guiding a fibre cable.

Contact points are points which are designed for contacting and guiding a fibre or a fibre cable, taking into account typical or specific values for the bendability or rigidity of the fibre or the fibre cable. A guide element may be shaped and/or arranged such as to contact a fibre or a fibre cable guided by it in a single location, or in a plurality of single locations, of the surface of the guide element. These locations are referred to as contact points herein.

Alternatively, a guide element may be shaped and/or arranged such as to contact a fibre or a fibre cable guided by it over an extended area of the surface of the guide element. This extended area may be considered to comprise a plurality of contact points.

A guide element may provide one contact point, two contact points, or more contact points for contacting and guiding a fibre or a fibre cable.

Where a guide element can be pivoted relative to another guide element, the guide element may not provide a contact point when the guide element is in a first pivot position, but may provide a contact point in a second pivot position.

In a fibre guide according to the present disclosure, the plurality of guide elements provides three contact points, namely a first, a second and a third contact point. The three contact points may be arranged in a geometric plane.

According to the present disclosure, the fibre guide comprises a hinge defining a pivot axis. The hinge pivotably attaches a first guide element to a second guide element. The hinge may be formed, for example, by a hinge pin and a hinge aperture, engaged with each other. The hinge pin may be comprised in the first guide element, and the hinge aperture may be comprised in the second guide element. Alternatively, the hinge pin may be a separate element, and may be engaged with a first hinge aperture in the first guide element and a second hinge aperture in the second guide element.

Where the hinge comprises a cylindrical hinge pin, the pivot axis may be defined by a symmetry axis of the hinge pin.

The hinge may be oriented such that pivot axis extends in a direction perpendicular to the plane in which the three contact points are arranged.

The hinge may be a living hinge, i.e. a thin flexible or bendable element, formed as one piece with two adjacent guide elements that allows pivoting of one guide element relative to the other.

Geometrically, for any three points in space, a circle can be constructed, so that the three points lie on the circle. If, for example, the first and the second contact point are provided by a first guide element, and the third contact point is provided by a second guide element, pivotable about the pivot axis relative to the first guide element, a pivoting of the second guide element changes the position of the third contact point, so that after pivoting, the three contact points are arranged on a new, different circle that usually has a different radius from the radius of the circle through the contact points before pivoting.

In a fibre guide according to the present disclosure, the second guide element can be pivoted, relative to the first guide element, about the pivot axis between a first pivot position, in which the first, second and third contact points are arranged on a first circle having a first radius, and a second pivot position, in which the first, second and third contact points are arranged on a second circle having a second radius, the second radius being different from the first radius. The first circle and the second circle may be arranged in the same geometrical plane.

The centre of the first or second circle through the three contact points can be found by a) constructing the perpendicular bisector of the first and the second contact point, b) constructing the perpendicular bisector of the second and the third contact point, and c) determining their point of intersection.

The radius of the circle through the three contact points is the actual bend radius of the fibre cable guided by the guide elements. It may not be smaller than the minimum bend radius of the fibre, the fibre cable or of any of the optical fibres in a multi-fibre cable.

Most fibre types in telecommunication networks have a minimum bend radius of greater than 2 cm. The three contact points will thus lie on a circle having a radius of at least 2 cm. Therefore, in certain embodiments of a fibre guide according to the present disclosure, the second radius is smaller than the first radius, and the second radius is 2 cm or more

In certain embodiments, one guide element of the plurality of guide elements forms an aperture for receiving an attachment element for attaching the fibre guide to a support. One guide element may, for example, form a through hole for receiving a screw, where the screw can engage with a screw hole in a support, e.g. in a base plate of a fibre management device. This is an efficient and cost-effective way to affix the fibre guide to another element of the fibre management device.

Attachment of the fibre guide to a support can be done in various ways. In certain embodiments of the fibre guide according to the present invention, one guide element of the plurality of guide elements comprises attachment means for attaching the fibre guide to a support. The attachment means may be, for example, a clip, a latch, or a layer of adhesive. The attachment means may facilitate releasable attachment of the fibre guide to a support, i.e. the attachment means may be a releasable attachment means.

To reduce the manufacturing cost of fibre management devices by economies of scale, it may be advantageous to use as many identical components as possible. Hence, in certain embodiments of a fibre guide according to the present disclosure, the first guide element and the second guide element have identical shapes. In certain of these embodiments, all guide elements of the plurality of guide elements have identical shapes.

In fibre guides according to the present disclosure, the plurality of guide elements provides at least three contact points. Each guide element provides at least one contact point. Components of the fibre guide that do not provide at least contact point are not considered guide elements. A guide element may provide one, two, three or more contact points.

It may be advantageous to provide contact points that are evenly distributed along the length of the fibre routing path. This may help support the fibre cable evenly and avoid undesired deformation of the fibre cable, e.g. under stress or external forces. Hence, in specific embodiments, each guide element of the plurality of guide elements provides exactly one contact point. In certain other embodiments, each guide element of the plurality of guide elements provides exactly two contact points. Generally, each guide element of the plurality of guide elements may provide the same number of contact points.

It may be advantageous to put a lower limit to the bending radius that a fibre guide according to the present disclosure can form. This may avoid installers setting the bending radius of the fibre guide to unrealistically low radii unintentionally. Abutment surfaces on the guide elements provide a way to do this.

Hence in certain embodiments, the first guide element has a first abutment surface, and the second guide element has a corresponding second abutment surface, opposite to the first abutment surface, wherein the abutment surfaces are arranged such that by pivoting the second guide element relative to the first guide element, the first abutment surface and the second abutment surface can be brought into contact. The contact between the abutment surfaces prevents further pivoting and thereby can help avoid too small bending radii.

Generally, abutment surfaces can have any shape. Specifically, abutment surfaces can be flat surfaces, two-dimensionally curved surfaces, such as the curved surface of a cylinder segment, or three-dimensionally curved surfaces, such as the surface of a segment of a sphere.

To provide a well-defined abutment for the pivoting second guide element, and generally for any pivoting guide element, it is generally advantageous that two opposed abutment surfaces are flat. The abutment position can be particularly well-defined if the opposed abutment surfaces are oriented parallel to the pivot axis about which the respective guide elements pivot, i.e. if the geometrical plane of any of the abutment surfaces is not intersected by the pivot axis. Hence, in certain embodiments, the first and the second the abutment surfaces are flat and are oriented parallel to the pivot axis.

In a particularly advantageous geometry, flat opposed abutment surfaces are parallel when they are in contact with each other, i.e. when the second guide element is in the pivot position in which the abutment surfaces are in contact with each other.

Fibre guides according to the present disclosure are useable for guiding a fibre cable in a two-dimensional space, such as in different directions parallel to a base plate on which the fibre guide is mounted, or in different directions parallel to a wall on which the fibre guide is mounted, such as in large-scale RFO applications.

A fibre guide as described herein can have more than two, three or four, five, or even more than five guide elements. Correspondingly, such a fibre guide may comprise more than one hinge, e.g. two, three, four or even more hinges. Each hinge defines a pivot axis and pivotably attaches two adjacent guide elements to each other. To avoid guiding the fibre cable out of a plane, and also to simplify the fibre guide, the pivot axes defined by the hinges are parallel to each other. In use, when the fibre guide is attached to a flat support, such as a base plate of a fibre tray, it is advantageous to have the parallel pivot axes extend orthogonal to the flat support.

Hence, in certain embodiments, the plurality of guide elements further provides a fourth and a fifth contact point for contacting and guiding the fibre cable, wherein the plurality of guide elements comprises a third and a fourth guide element, wherein the fibre guide comprises a second hinge defining a second pivot axis and pivotably attaching the third guide element to the fourth guide element, wherein the fourth guide element can be pivoted, relative to the third guide element, about the second pivot axis between a first pivot position, in which the third, fourth and fifth contact points are arranged on a third circle having a third radius, and a second pivot position, in which the third, fourth and fifth contact points are arranged on a fourth circle having a fourth radius, the fourth radius being different from the third radius, and wherein the first pivot axis and the second pivot axis are parallel to each other.

The third and the fourth guide elements may be arranged such that the direction of curvature of the fibre cable as guided by the third, fourth and fifth contact points is opposite to the direction of curvature as guided by the first, second and third contact point, such as a "right turn" versus a "left turn" in the guiding path for the fibre cable.

A fibre guide according to the present disclosure may be assembled from different separate pieces. Each of the guide elements, for example, may be an individual piece, and the individual pieces are assembled to form the fibre guide. The hinge(s) may be individual pieces.

Alternatively, the fibre guide may be formed as a single piece. In that case, the hinge(s) may be formed as a living hinge, i.e. as a thin flexible portion between guide elements that allows bending and pivoting. A single-piece fibre guide may provide cost advantages in manufacturing, and/or in assembly of a fibre management device comprising the fibre guide.

It may be desirable to extend an existing fibre guide according to the present disclosure, e.g. by adding an additional guide element to the existing plurality of guide elements. The additional guide element may help guide the fibre cable further, or it may help to guide a new type of fibre cable in accordance with its minimum bending radius.

Therefore, in certain embodiments, the fibre guide comprises engagement means for attaching a further guide element or a further hinge to the fibre guide. The engagement means may, for example, be comprised in a guide element of the plurality of guide elements, or it may be comprised in a/the hinge. In some of these embodiments, the fibre guide comprises engagement means for attaching the further guide element or the further hinge to the fibre guide removably.

The present disclosure provides, in a further aspect, a fibre-optic management device, such as a fibre tray, an optical distribution frame, a splitter module, or an overlength storage, comprising a fibre guide as described herein.

In a yet further aspect, the present disclosure also provides a fibre-optic communication network comprising an optical fibre cable and a fibre-optic management device as described in the previous paragraph.

In another aspect, the present disclosure also provides a process of adjusting the bending radius of a fibre guide as described herein to a desired bending radius, comprising the step of pivoting the second guide element, relative to the first guide element, about the pivot axis into a pivot position in which the contact points are arranged on a circle having the desired bending radius.

The fibre guide according to the present disclosure will now be described in more detail with reference to the following Figures exemplifying particular embodiments:
- Fig. 1: Plan view of a first fibre guide according to the present disclosure;
- Fig. 2: Plan view of the first fibre guide in a different pivot position;
- Fig. 3: Plan view of a second fibre guide according to the present disclosure; and
- Fig. 4: Plan view of the second fibre guide in a different pivot position.

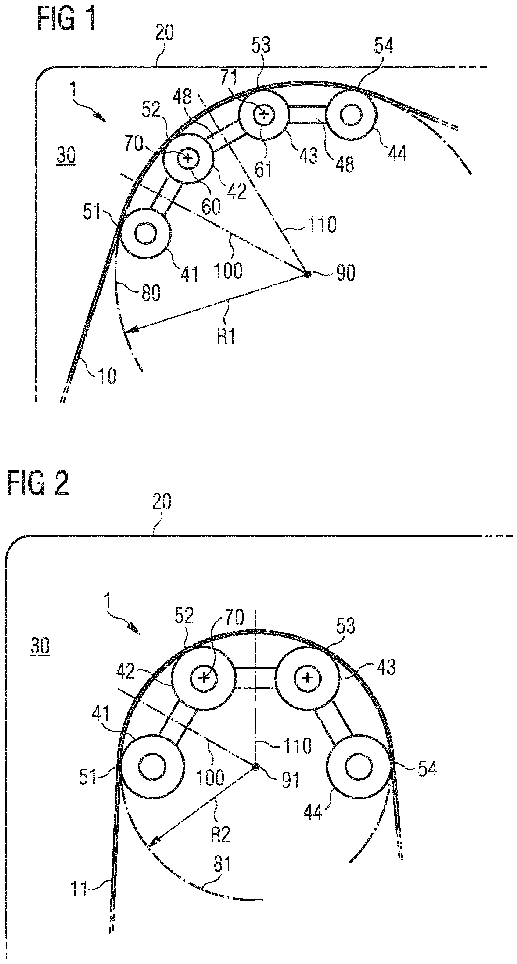

**Figure 1** is a plan view of a first fibre guide 1 according to the present disclosure. It is shown guiding an optical fibre cable 10 in a fibre management device, which in this embodiment is a fibre tray 20. The fibre guide 1 is mounted on a base plate 30 of the fibre tray 20. The fibre guide 1 comprises four cylindrical guide elements 41, 42, 43, 44, connected by arms 48 with their respective adjacent guide elements. The first guide element 41 provides a first contact point 51 for contacting and guiding the fibre cable 10, the second guide element 42 provides a second contact point 52, and the third guide element 43 provides a third contact point 53.

The fibre guide 1 comprises a first hinge 60 in the second guide element 42 which defines a first pivot axis 70, extending orthogonal to the base plate 30 and to the plane of the drawing, about which the third guide element 43 can be pivoted, relative to the second guide element 42.

Figure 1 shows the third guide element 43 in a first pivot position, in which the first, the second and the third contact points 51, 52, 53 are located on a first circle 80, the centre 90 of which can be found by finding the point where the perpendicular bisector 100 of the first contact point 51 and the second contact point 52 intersects with the perpendicular bisector 110 of the second contact point 52 and the third contact point 53. Although theoretically not exactly, in practice, the radius R1 of the first circle 80 is the bending radius of the fibre cable 10 in the first pivot position of the third guide element 43.

In the embodiment shown in Figure 1, the fibre guide 1 comprises a second hinge 61 in the third guide element 43 which defines a second pivot axis 71 about which the fourth guide element 44 can be pivoted, relative to the third guide element 43. The second, the third and the fourth contact points 52, 53, 54 are located on another circle (not shown), the centre of which can be found by finding the point where the perpendicular bisector of the second contact point 52 and the third contact point 53 intersects with the perpendicular bisector of the third contact point 53 and the fourth contact point 54.

**Figure 2** is a plan view, at a slightly smaller scale, of the same first fibre guide 1, guiding a different fibre cable 11 which can cope with a smaller bend radius than the fibre cable 10 of Figure 1. In Figure 2 the third guide element 43 is shown pivoted into a second pivot position, relative to the second guide element 42. In this second pivot position, the contact points 51, 52, 53 of the first, second and third guide elements 41, 42, 43 are located on a second circle 81, the centre 91 of which can again be found by finding the intersection point of the perpendicular bisector 100 of the first contact point 51 and the second contact point 52 and the perpendicular bisector 110 of the second contact point 52 and the third contact point 53. The radius R2 of the second circle 81 is smaller than the radius R1 of the first circle 80 shown in Figure 1.

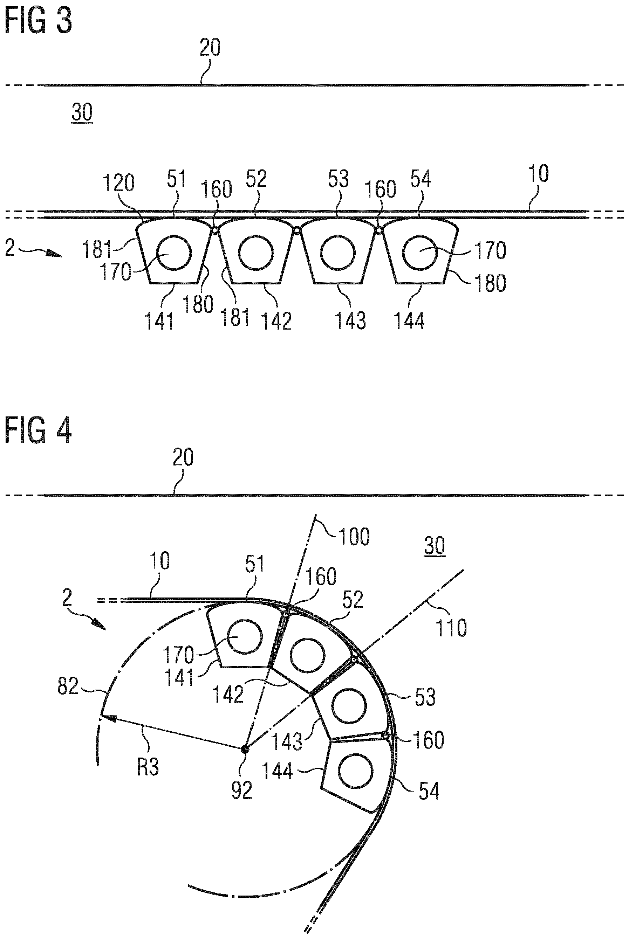

**Figure 3** is a plan view of a second fibre guide 2 according to the present disclosure, again mounted on a base plate 30 of a fibre tray 20. It is shown guiding an optical fibre cable 10. The fibre guide 2 comprises four identical prismatic guide elements 141, 142, 143, 144, connected by hinges 160 with their respective adjacent guide elements. Each of the guide elements 141, 142, 143, 144 has a trapezoidal cross section and comprises a two-dimensionally curved outer surface 120, so that the first guide element 141 provides a first contact point 51 for contacting and guiding the fibre cable 10, the second guide element 142 provides a second contact point 52, and the third guide element 143 provides a third contact point 53, etc.

Each hinge 160 connects a first-adjacent guide element 141, 142, 143, 144 to an adjacent second-adjacent guide element 141, 142, 143, 144 and defines a pivot axis, extending orthogonal to the base plate 30 and to the plane of the drawing, about which the second-adjacent guide element 141, 142, 143, 144 can be pivoted relative to the first-adjacent guide element 141, 142, 143, 144. The pivot axes are located in the respective centres of the hinges 160. For example, the leftmost hinge 160 defines a pivot axis about which the second guide element 142 can be pivoted relative to the first guide element 141.

Figure 3 shows the second, third and fourth guide elements 142, 143, 144 in their respective first pivot positions relative to the first, second and third guide elements 141, 142, 143, in which pivot positions the contact points 51, 52, 53, 54 are located on a straight line. Geometrically, the straight line is a section of a circle of infinite radius. The fibre cable 10 contacts the guide elements 141, 142, 143, 144 at the contact points 51, 52, 53, 54 and is thus guided straight by these contact points 51, 52, 53, 54.

Each of the identical guide elements 141, 142, 143, 144 comprises a respective aperture 170 for receiving a screw, by which the guide element 141, 142, 143, 144, and thereby the entire fibre guide 2, can be fixed to the base plate 30. The base plate 30 can be provided with suitable screw holes (not shown) in locations that are considered suitable locations to fix guide elements 141, 142, 143, 144 to. By fixing the first guide element 141 and the last, fourth guide element 144, the fibre guide 2 can be attached as a whole, and the specific bending radius R3, determined by the pivot angles, can be fixed.

As will be shown in Figure 4, the trapezoidal shape - in this plan view - of the guide elements 141, 142, 143, 144 provides each guide element with a first abutment surface 180 and a second abutment surface 181. Both abutment surfaces 180, 181 are flat and parallel to the pivot axis formed by the hinge 160. When pivoting one guide element 141, 142, 143, 144 relative to an adjacent guide element 141, 142, 143, 144, from the pivot position shown in Figure 3 into a pivot position providing a smaller bend radius, at a certain pivot position and at a certain corresponding pivot angle the first abutment surface 180 of the one guide element contacts the second abutment surface 181 of the adjacent guide element 141, 142, 143, 144. This contact prevents further pivoting towards even smaller bend radii, so that the second fibre guide 2 can physically not be brought into a configuration in which it provides a bend radius smaller than a minimum bend radius defined by the shape of the guide elements 141, 142, 143, 144.

For completeness it is noted that the guide elements 41, 42, 43, 44, 141, 142, 143, 144 in all Figures have no relevant structure in the third dimension orthogonal to the plane of the drawings, which remains invisible in the plan views. All edges and planes extending in this third dimension are orthogonal to the plane of the drawings.

**Figure 4** is a plan view of the second fibre guide 2, guiding the fibre cable 10 along a different, curved routing path. The second, the third and the fourth guide elements 142, 143, 144 are shown pivoted into a second pivot position, relative to the first, the second and the third guide element 141, 142, 143.

In this second pivot position, the contact points 51, 52, 53 of the first, second and third guide elements 141, 142, 143 are located on a circle 82 of radius R3, the centre 92 of which can again be found by identifying the intersection point of the perpendicular bisector 100 of the first contact point 51 and the second contact point 52 and the perpendicular bisector 110 of the second contact point 52 and the third contact point 53.

In this second pivot position, the respective opposed abutment surfaces 180, 181 of adjacent guide elements 141, 142, 143, 144 contact each other, and prevent that adjacent guide elements 141, 142, 143, 144 be pivoted further towards each other.

The positions of the contact points 51, 52, 53, 54 of the guide elements 141, 142, 143, 144 define the routing path of the fibre cable 10. As the contact points 51, 52, 53, 54 are arranged, after pivoting, on the circle 82 having radius R3, the routing path defines a bend radius for the fibre cable 10 of R3, R3 being smaller than the infinite radius of the straight routing path defined by the contact points 51, 52, 53, 54 before pivoting, i.e. in the straight configuration shown in Figure 3.

## Claims

1. Fibre guide (1, 2) for guiding an optical fibre cable (10, 11) in a fibre management device (20), the fibre guide comprising
a) a plurality of guide elements (41, 42, 43, 44, 141, 142, 143, 144) providing a first contact point (51), a second contact point (52) and a third contact point (53) for contacting and guiding the fibre cable,
**characterized in that** the fibre guide further comprises
b) a hinge (60, 61, 160), defining a pivot axis (70, 71) and pivotably attaching a first guide element (42, 51) of the plurality of guide elements to a second guide element (43, 52) of the plurality of guide elements,
wherein the second guide element (43, 52) can be pivoted, relative to the first guide element (42, 51), about the pivot axis (70, 71) between a first pivot position, in which the first, second and third contact points are arranged on a first circle (80) having a first radius (R1), and a second pivot position, in which the first, second and third contact points are arranged on a second circle (81) having a second radius (R2, R3), the second radius being different from the first radius.

2. Fibre guide according to claim 1, wherein one guide element (41, 42, 43, 44, 141, 142, 143, 144) of the plurality of guide elements forms an aperture (170) for receiving an attachment element for attaching the fibre guide (1, 2) to a support (30).

3. Fibre guide according to claim 1 or claim 2, wherein one guide element (41, 42, 43, 44, 141, 142, 143, 144) of the plurality of guide elements comprises attachment means for attaching the fibre guide (1, 2) to a support (30).

4. Fibre guide according to any one of the preceding claims, wherein the first guide element (42, 51) and the second guide element (43, 52) have identical shapes.

5. Fibre guide according to any one of the preceding claims, wherein all guide elements (41, 42, 43, 44, 141, 142, 143, 144) of the plurality of guide elements have identical shapes.

6. Fibre guide according to any one of the preceding claims, wherein each guide element (41, 42, 43, 44, 141, 142, 143, 144) of the plurality of guide elements provides the same number of contact points (51, 52, 53, 54).

7. Fibre guide according to any one of the preceding claims, wherein the first guide element (141, 142, 143, 144) has a first abutment surface (180), and the second guide element (141, 142, 143, 144) has a corresponding second abutment surface (181), opposite to the first abutment surface, wherein the abutment surfaces are arranged such that by pivoting the second guide element relative to the first guide element, the first abutment surface and the second abutment surface can be brought into contact.

8. Fibre guide according claim 7, wherein first and the second the abutment surfaces (180, 181) are flat and are oriented parallel to the pivot axis (70, 71).

9. Fibre guide according to any one of the preceding claims, wherein the plurality of guide elements (41, 42, 43, 44, 141, 142, 143, 144) further provides a fourth and a fifth contact point (54) for contacting and guiding the fibre cable (10, 11),
wherein the plurality of guide elements comprises a third and a fourth guide element (43, 44, 143, 144),
wherein the fibre guide comprises a second hinge (61, 160) defining a second pivot axis (71) and pivotably attaching the third guide element (43, 143) to the fourth guide element (44, 144),
wherein the fourth guide element can be pivoted, relative to the third guide element, about the second pivot axis between a first pivot position, in which the third, fourth and fifth contact points are arranged on a third circle having a third radius, and a second pivot position, in which the third, fourth and fifth contact points are arranged on a fourth circle having a fourth radius,
the fourth radius being different from the third radius,
and wherein the first pivot axis (70) and the second pivot axis (71) are parallel to each other.

10. Fibre guide according to any one of the preceding claims, formed as a single piece.

11. Fibre guide according to any one of the preceding claims, further comprising engagement means for attaching a further guide element or a further hinge to the fibre guide (1, 2).

12. Fibre guide according to any one of the preceding claims, wherein the second radius (R2, R3) is smaller than the first radius (R1), and wherein the second radius is 2 cm or more.

13. Process of adjusting the bending radius of a fibre guide (1, 2) according to any one of the preceding claims to a desired bending radius (R1, R2, R3), comprising the step of pivoting the second guide element (43, 52), relative to the first guide element (42, 51), about the pivot axis (70, 71) into a pivot position in which the contact points (51, 52, 53) are arranged on a circle (80, 81, 82) having the desired bending radius (R1, R2, R3).

14. Fibre-optic management device (30), such as a fibre tray, an optical distribution frame, a splitter module, or an overlength storage, comprising a fibre guide (1, 2) according to any one of claims 1 to 12.

15. Fibre-optic communication network comprising an optical fibre cable (10, 11) and a fibre-optic management device (30) according to claim 14.
